# EUROPÄISCHE PATENTSCHRIFT

(11) **EP 2 443 691 B1**
(45) Veröffentlichungstag und Bekanntmachung des Hinweises auf die Patenterteilung: **04.09.2013**
(21) Anmeldenummer: 10736995.1
(22) Anmeldetag: 18.06.2010
(51) Int. Cl.: H01M 10/04, H01M 2/02, H01M 2/04, H01M 2/06, H01M 2/26, H01M 10/0587, H01M 10/0525

(54) **KNOPFZELLE MIT WICKELELEKTRODE UND VERFAHREN ZU IHRER HERSTELLUNG**
BUTTON CELL HAVING WINDING ELECTRODE AND METHOD FOR THE PRODUCTION THEREOF
PILE BOUTON À ÉLECTRODE ENROULÉE ET SON PROCÉDÉ DE FABRICATION

(30) Priorität: 18.06.2009 DE 102009030359; 31.12.2009 DE 102009060800
(43) Veröffentlichungstag der Anmeldung: 25.04.2012
(73) Patentinhaber: VARTA Microbattery GmbH, 73479 Ellwangen (DE)
(72) Erfinder: GAUGLER, Winfried, 73479 Ellwangen (DE)
(74) Vertreter: Patentanwälte Ruff, Wilhelm, Beier, Dauster & Partner
(86) Internationale Anmeldenummer: PCT/EP2010/058637
(87) Internationale Veröffentlichungsnummer: WO 2010/146154

(56) Entgegenhaltungen:
- EP-A1- 1 372 209
- EP-A1- 1 808 916
- WO-A1-2010/089152
- JP-A- 2007 294 111
- JP-A- 2008 262 825
- JP-B- 3 902 330
- US-A- 3 960 599

## Beschreibung

Die vorliegende Erfindung betrifft Knopfzellen mit einem Gehäuse aus zwei metallischen Gehäusehalbteilen, das einen gewickelten Elektroden-Separator-Verbund enthält, sowie ein Verfahren zu ihrer Herstelllung.

Knopfzellen weisen überlicherweise ein Gehäuse aus zwei Gehäusehalbteilen, einem Zellenbecher und einem Zellendeckel, auf. Diese können beispielsweise aus vernickeltem Tiefziehblech als Stanzziehteile hergestellt werden. Gewöhnlich ist der Zellenbecher positiv und der Gehäusedeckel negativ gepolt. In dem Gehäuse können die verschiedensten elektrochemischen Systeme enthalten sein, beispielsweise Zink/MnO₂, primäre und sekundäre Lithium-Systeme oder sekundäre Systeme wie Nickel/Cadmium oder Nickel/Metallhydrid.

Der flüssigkeitsdichte Verschluss von Knopfzellen erfolgt klassisch durch Umbördeln des Randes des Zellenbechers über den Rand des Zellendeckels in Verbindung mit einem Kunststoffring, der zwischen Zellenbecher und Zellendeckel angeordnet ist und der geichzeitig als Dichtungselement sowie zur elektrischen Isolierung des Zellenbechers und des Zellendeckels dient. Derartige Knopfzellen sind beispielsweise in der DE 31 13 309 beschrieben.

Alternativ ist es jedoch auch möglich, Knopfzellen zu fertigen, bei denen Zellenbecher und Zellendeckel in axialer Richtung ausschließlich durch eine kraftschlüssige Verbindung zusammengehalten werden und die entsprechend keinen umgebördelten Becherrand aufweisen. Derartige Knopfzellen sowie ein Verfahren zur ihrer Herstellung sind in der DE 10 2009 017 5141 beschrieben. Ungeachtet der diversen Vorteile, die solche Knopfzellen ohne Bördelung aufweisen können, sind sie in axialer Richtung jedoch weniger belastbar als vergleichbare Knopfzellen mit umgebördeltem Becherrand, insbesondere was axiale mechanische Belastungen angeht, die ihre Ursache im Inneren der Knopfzelle haben. So sind zum Beispiel die Elektroden von wiederaufladbaren Lithium-Ionen-Systemen bei Lade- und Entladevorgängen stets Volumenänderungen ausgesetzt. Die dabei auftretenden axialen Kräfte können bei Knopfzellen ohne Bördelung natürlich vergleichsweise leichter zu Undichtigkeiten führen als bei Knopfzellen mit Bördelung.

Eine Lösung für dieses Problem findet sich in der DE 10 2009 030 359 und der DE 10 2009 008 859. Unter anderem finden sich dort Ausführungen zu Knopfzellen mit einem Gehäuse mit einem ebenen Boden- und einem dazu parallelen ebenen Deckelbereich, wobei innerhalb des Gehäuses ein Verbund aus flachen Elektroden- und Separatorschichten in Form eines vorzugsweise spiralförmigen Elektrodenwickels derart angeordnet ist, dass die Stirnseiten des Wickels in Richtung des ebenen Bodenbereichs und des ebenen Deckelbereichs weisen. Die Elektrodenschichten des Wickels sind also im Wesentlichen orthogonal zu dem ebenen Boden- und Deckelbereich des Gehäuses ausgerichtet. Dadurch können radiale Kräfte, wie sie bei den erwähnten Lade- und Entladevorgängen von Lithium-lonen-Systemen auftreten, grundsätzlich besser aufgefangen werden als bei klassischen Lithium-lonen-Knopfzellen, in denen Elektrodenschichten gestapelt in paralleler Ausrichtung zu den ebenen Boden- und Deckelbereichen angeordnet sind.

Wickel aus flachen Elektroden- und Separatorschichten lassen sich recht einfach nach bekannten Verfahren (siehe zum Beispiel DE 36 38 793) herstellen, indem auf einen als Endlosband vorliegenden Separator die Elektroden flächig, insbesondere in Form von Streifen, aufgebracht, insbesondere auflaminiert, werden. Aufgewickelt wird der Verbund aus Elektroden und Separatoren in der Regel auf einem sogenannten Wickeldorn. Nach Abstreifen des Wickels vom Wickeldorn bleibt im Zentrum des Wickels ein axialer Hohlraum zurück, was zur Folge hat, dass sich der Wickel gegebenenfalls in diesen Hohlraum hinein entspannen kann. Dies kann jedoch unter Umständen zu Problemen bei der elektrischen Kontaktierung der Elektroden mit den metallischen Gehäusehalbteilen führen.

Der vorliegenden Erfindung lag die Aufgabe zugrunde, eine Knopfzelle bereitzustellen, bei der die oben angesprochenen Probleme nicht oder nur in stark verringertem Maß auftreten.

Diese Aufgabe wird gelöst durch die Knopfzelle mit den Merkmalen des Anspruchs 1. Weiterhin wird diese Aufgabe gelöst durch das Verfahren mit den Merkmalen des Anspruchs 8. Bevorzugte Ausführungsformen der erfindungsgemäßen Knopfzelle sind in den abhängigen Ansprüchen 2 bis 7 angegeben. Der Wortlaut sämtlicher Ansprüche wird hiermit durch Bezugnahme zum Inhalt dieser Beschreibung gemacht.

Eine erfindungsgemäße Knopfzelle umfasst stets zwei metallische Gehäusehalbteile, die durch eine elektrisch isolierende Dichtung voneinander getrennt sind und die ein Gehäuse mit einem ebenen Bodenbereich und einem dazu parallelen ebenen Deckelbereich ausbilden. Bei den beiden Gehäusehalbteilen handelt es sich, wie eingangs erwähnt, in der Regel um einen sogenannten Gehäusebecher und einen Gehäusedeckel. Als Material für die Gehäusehalbteile sind insbesondere vernickelter Stahl oder Blech bevorzugt. Weiterhin als metallischer Werkstoff geeignet sind insbesondere Trimetalle, beispielsweise mit der Abfolge Nickel, Stahl (oder Edelstahl) und Kupfer (wobei die Nickelschicht bevorzugt die Außen- und die Kupferschicht bevorzugt die Innenseite des Knopfzellengehäuses bildet).

Als Dichtung kann beispielsweise eine Spritzguß- oder eine Foliendichtung zum Einsatz kommen. Letztere sind beispielsweise in der DE 196 47 593 beschrieben.

Innerhalb des Gehäuses sind mindestens eine positive und mindestens eine negative Elektrode angeordnet und zwar jeweils in Form von flachen Elektrodenschichten. Die Elektroden sind vorzugsweise über mindestens einen flächigen Separator miteinander verbunden. Bevorzugt sind die Elektroden auf diesen Separator auflaminiert oder aufgeklebt. Die Elektroden und der Separator weisen in der Regel jeweils nur Dicken im µm-Bereich auf. Als Separator dient in der Regel eine poröse Kunststofffolie.

Im Gehäuse einer erfindungsgemäßen Knopfzelle liegt dieser Verbund in Form eines Wickels, insbesondere in Form eines spiralförmigen Wickels, vor, wobei der Wickel derart angeordnet ist, dass seine Stirnseiten in Richtung des ebenen Bodenbereichs und des ebenen Deckelbereichs des Gehäuses weisen. Auf die Beschreibung von derartigen Wickeln und Knopfzellen mit derartigen Wickeln in den oben bereits erwähnten deutschen Patentanmeldungen DE 10 2009 030 359 und DE 10 2009 008 859 wird hiermit vollumfänglich Bezug genommen. Sämtliche in diesen Anmeldungen beschriebenen bevorzugten Ausführungsformen sollen auch für die vorliegend beschriebene Knopfzelle und den vorliegend beschriebenen Elektrodenwickel gelten.

Neben den Gehäusehalbteilen und dem Elektroden-Separator-Verbund umfasst eine erfindungsgemäße Knopfzelle stets noch metallische Ableiter, die die mindestens eine positive und/oder die mindestens eine negative Elektrode mit jeweils einem der Gehäusehalbteile elektrisch verbinden. Bevorzugt bestehen der oder die mit der mindestens einen positiven Elektrode verbundenen Ableiter aus Aluminium. Die mit der mindestens einen negativen Elektrode verbundenen Ableiter bestehen bevorzugt aus Nickel oder Kupfer.

Elektrodenseitig sind die Ableiter bevorzugt an Stromkollektoren angebunden. Bei diesen handelt es sich in der Regel um metallische Folien oder Netze, welche üblicherweise beidseitig mit Elektrodenaktivmaterial beschichtet sind. Auf der Seite der positiven Elektrode bestehen diese Stromkollektoren bevorzugt aus Aluminium, auf Seiten der negativen Elektrode bevorzugt aus Nickel oder Kupfer. Die Folien oder Netze weisen insbesondere Dicken zwischen 1 µm und 100 µm auf. Die Anbindung der Ableiter an die Stromkollektoren erfolgt bevorzugt durch Verschweißung.

Insbesondere im Hinblick auf bevorzugte Ausführungsformen des in einer erfindungsgemäßen Knopfzelle angeordneten Elektroden-Separator-Verbundes wird Bezug genommen auf die DE 10 2009 030 359 und die DE 10 2009 008 859. Diesen entlassen sich insbesondere bevorzugte Schichtabfolgen und Schichtdicken für Elektroden und Separatoren entnehmen wie z.B. einen Verbund mit der Schichtabfolge
- negative Elektrode / Separator / positive Elektrode / Separator oder
- positive Elektrode / Separator / negative Elektrode / Separator.

Auch Verbünde mit den Schichtabfolgen
- negative Elektrode / Separator / positive Elektrode / Separator / negative Elektrode
   oder
- positive Elektrode / Separator / negative Elektrode / Separator / positive Elektrode

können bevorzugt sein. In diesen weist der Verbund somit mehr als eine positive und/oder mehr als eine negative Elektrode auf.

Besonders bevorzugt ist mindestens eine der Elektroden einer erfindungsgemäßen Knopfzelle eine Lithium interkalierende Elektrode. Bevorzugt handelt es sich bei der erfindungsgemäßen Knopfzelle um eine Lithium-lonen-Batterie, insbesondere um eine sekundäre Lithium-lonen-Batterie.

Besonders zeichnet sich eine erfindungsgemäße Knopfzelle dadurch aus, dass zumindest einer der Ableiter, vorzugsweise sowohl der mit der mindestens einen positiven und der mit der mindestens einen negativen Elektrode verbundene Ableiter, durch Verschweißung mit dem jeweiligen Gehäusehalbteil verbunden ist.

Wie eingangs bereits erwähnt wurde, unterliegen insbesondere bei Lithium-lonen-Knopfzellen die Elektroden während eines Lade-Entlade-Zykluses Volumenänderungen, in deren Folge es zu Kontaktproblemen zwischen den Ableitern und den Gehäusehalbteilen kommen kann. Derartige Kontaktprobleme treten nicht mehr auf, wenn die Ableiter mit den jeweiligen Gehäusehalbteilen verschweißt sind.

Besonders bevorzugt sind der oder die Ableiter im ebenen Boden- bzw. Deckelbereich des Gehäuses an die Innenseite des Gehäuses angeschweißt. Dazu muss nach herkömmlichen Verfahren der Verschweißungsvorgang vor der Gehäusemontage erfolgen, was produktionstechnisch sehr schwierig zu bewerkstelligen ist. Schweißverbindungen wurden zur Anbindung der Ableiter an die Innenseite der Gehäusehalbteile daher als sehr nachteilig angesehen. Durch das unten noch im Detail beschriebene erfindungsgemäße Verfahren konnte jedoch eine Lösung bereitgestellt werden, die auch aus produktionstechnischer Sicht große Vorteile aufweist.

Durch die Verschweißung sind also die mindestens eine positive Elektrode und/oder die mindestens eine negative Elektrode über einen oder mehrere Ableiter direkt mit dem ebenen Bodenbereich bzw. mit dem ebenen Deckelbereich des Gehäuses einer erfindungsgemäßen Knopfzelle verbunden, wobei in der Regel der Gehäusedeckel negativ gepolt ist und der Gehäusebecher positiv.

Bevorzugt handelt es sich bei der erfindungsgemäßen Knopfzelle um eine klassische Knopfzelle mit einem kreisrundem ebenen Bodenbereich und einem kreisrunden ebenen Deckelbereich. In einigen Ausführungsformen kann die erfindungsgemäße Knopfzelle jedoch eine ovale Ausgestaltung aufweisen. Zu beachten ist jedoch, dass das Verhältnis von Höhe zu Durchmesser bevorzugt stets unterhalb von 1 liegt. Besonders bevorzugt liegt es bei einer erfindungsgemäßen Knopfzelle zwischen 0,1 und 0,9, insbesondere zwischen 0,15 und 0,7. Unter der Höhe soll dabei der kürzeste Abstand zwischen dem ebenen Bodenbereich und dem dazu parallelen ebenen Deckelbereich verstanden werden. Der Durchmesser meint die maximale Entfernung zweier Punkte auf dem Mantelbereich der Knopfzelle.

Bei den Ableitern einer erfindungsgemäßen Knopfzelle handelt es sich in bevorzugten Ausführungsformen um flächige Ableiter, insbesondere um Metallfolien, besonders bevorzugt um rechteck-, streifen- oder bandförmige Metallfolien. Die Folien weisen bevorzugt Dicken zwischen 5 µm und 100 µm auf.

Bevorzugt handelt es sich bei den Ableitern um separate Bauteile, die an die Elektroden, insbesondere an die Stromkollektoren in den Elektroden, angebunden, insbesondere angeschweißt sind. Alternativ kann es sich bei den Ableitern aber auch um unbeschichtete Abschnitte eines Stromkollektors (Abschnitte, die frei von Elektrodenaktivmaterial sind), insbesondere um die unbeschichteten Enden eines solchen Stromkollektors, handeln. Durch Abknicken dieser unbeschichteten Abschnitte, insbesondere dieser unbeschichteten Enden, beispielsweise um 90°, lassen sich diese Enden mit dem Boden- oder Deckelbereich einer erfindungsgemäßen Knopfzelle verbinden. Die Verbindung erfolgt dort erfindungsgemäß bevorzugt durch Verschweißung.

Bevorzugt liegt zumindest ein Teilabschnitt des oder der Ableiter im Boden- oder Deckelbereich des Gehäuses flach an der Innenseite des oder der Gehäusehalbteile an, insbesondere wenn es sich bei den Ableitern um flächige Ableiter wie Folien handelt. Solche Ableiter können eine flache Schicht zwischen der Innenseite der Gehäusehalbteile und einer Stirnseite des Elektrodenwickels und somit einen großflächigen elektrischen Kontakt zum Gehäuse bilden.

Da an den Stirnseiten des Elektrodenwickels jedoch grundsätzlich sowohl positive als auch negative Elektroden offen liegen können, gilt es einen Kurzschluss zwischen den Elektroden zu vermeiden. In besonders bevorzugten Ausführungsformen umfasst eine erfindungsgemäße Knopfzelle daher mindestens ein separates Isoliermittel, das einen direkten elektrischen Kontakt zwischen den Stirnseiten des Wickels und den Ableitern, insbesondere einem flach an der Innenseite der Gehäusehalbteile anliegenden Teilabschnitt des oder der Ableiter, unterbindet. Bei einem solchen Isoliermittel kann es sich zum Beispiel um eine Folie wie z.B. eine Kunststoffklebefolie handeln, mit der die der Innenseite des Knopfzellengehäuses abgewandte Seite des oder der Ableiter abgedeckt ist.

Der Elektrodenwickel einer erfindungsgemäßen Knopfzelle lässt sich nach bekannten Verfahren wie zum Beispiel dem in der DE 36 38 793 beschriebenen herstellen, gemäß denen Elektroden und Separatoren auf einem Wickeldorn aufgewickelt werden. Nach dem Abstreifen des Wickels vom Wickeldorn kann sich im Zentrum des Wickels ein axialer Hohlraum befinden, vorzugsweise ein im Wesentlichen zylindrischer axialer Hohlraum. Im Gehäuse einer erfindungsgemäßen Knopfzelle wird ein solcher Hohlraum mantelseitig durch den Wickel begrenzt und stirnseitig durch den Boden- bzw. den Deckelbereich des Gehäuses oder zumindest durch einen Teilbereich derselben. Besonders bevorzugt ist der mindestens eine Ableiter in einem dieser Teilbereiche mit einem oder den Gehäusehalbteilen verschweißt.

In dem axialen Hohlraum kann sich gegebenenfalls ein Wickelkern befinden, mit dem verhindert werden kann, dass sich der Wickel unkontrolliert in den Hohlraum hinein entspannt.

Bei der erfindungsgemäßen Knopfzelle handelt es sich insbesondere um eine Knopfzelle ohne Bördelung, wie sie in der eingangs bereits erwähnten DE 10 2009 017 514 beschrieben ist. Entsprechend besteht zwischen den Gehäusehalbteilen bevorzugt eine ausschließlich kraftschlüssige Verbindung. Die erfindungsgemäße Knopfzelle weist also keinen ungebördelten Becherrand auf, wie dies bei aus dem Stand der Technik bekannten Knopfzellen stets der Fall ist. Die Knopfzelle ist bördelfrei verschlossen. Auch der Inhalt der DE 10 2009 017 514 wird vollumfänglich durch Bezugnahme zum Inhalt dieser Beschreibung gemacht. Sämtliche in diesen Anmeldungen beschriebenen bevorzugten Ausführungsformen sollen auch für die vorliegend beschriebene Knopfzelle und ihr Gehäuse gelten.

Wie oben bereits erwähnt, ist die Verschweißung von Ableitern mit der Innenseite von Knopfzellengehäusen produktionstechnisch recht aufwendig. Die vorliegende Erfindung begegnet diesem Problem durch das erfindungsgemäße Verfahren zur Herstellung von Knopfzellen, das stets mindestens die folgenden Schritte umfasst:
(a) Bereitstellen eines ersten und eines zweiten metallischen Gehäusehalbteils (vorzugsweise einem Zellenbecher und einem Zellendeckel),
(b) Einlegen eines Elektroden-Separator-Verbundes mit einer positiven und einer negativen Elektrode in eines der Gehäusehalbteile (vorzugsweise in den Zellendeckel), wobei an mindestens eine der Elektroden (bevorzugt an alle Elektroden) ein metallischer Ableiter angebunden ist,
(c) Zusammenfügen der beiden Gehäusehalbteile (vorzugsweise durch Einschieben des Zellendeckels in den Zellenbecher), gegebenenfalls unter Vornahme separater Schritte zur Abdichtung des Gehäuses (wie beispielsweise die Montage einer Dichtung) und
(d) Anschweißen von mindestens einem der Ableiter an die Innenseite eines der metallischen Gehäusehalbteile.

Die bei einem erfindungsgemäßen Verfahren zum Einsatz kommenden Bauteile wie die Gehäusehalbteile, die Ableiter und der Elektroden-Separator-Verbund wurden oben bereits beschrieben. Auf die entsprechenden Ausführungen wird hiermit Bezug genommen und verwiesen.

Besonders zeichnet sich das erfindungsgemäße Verfahren dadurch aus, dass Schritt (d) nach Schritt (c) durchgeführt wird. Das bedeutet, dass der mindestens eine Ableiter bei geschlossenem Gehäuse mit der Innenseite des Gehäuses verschweißt werden. Die Verschweißung muss entsprechend von außen durch die Gehäusewand von einem oder beiden Gehäusehalbteilen hindurch erfolgen.

Entsprechend stellt die vorliegende Erfindung somit Knopfzellen bereit, die Schweißnähte und/oder Schweißpunkte aufweisen, die das Gehäuse ausgehend von seiner Außenseite durchdringen.

Besonders bevorzugt sind der oder die Ableiter und das Knopfzellengehäuse über eine oder mehrere punkt- und/oder linienförmige Schweißverbindungen miteinander verbunden.

Die Verschweißung von Ableitern und Gehäuse erfolgt mittels eines Lasers. Dessen Betriebsparameter müssen möglichst exakt an die Dicke des Gehäuses angepasst werden. Die Leistung lässt sich beispielsweise durch Variation der Pulsfrequenz modulieren. Schließlich soll der Laser lediglich für eine Verschweißung von Gehäuse und Ableiter sorgen während weitere Komponenten wie der Elektrodenwickel nach Möglichkeit nicht beschädigt werden sollen.

Geeignete Laser sind beispielsweise kommerziell erhältliche Faserlaser, also Festkörperlaser, bei denen der dotierte Kern einer Glasfaser das aktive Medium bildet. Das häufigste Dotierungselement für den laseraktiven Faserkern ist Erbium. Für Hochleistungsanwendungen wie vorliegend sind allerdings eher Ytterbium und Neodym bevorzugt.

Ungeachtet der Tatsache, dass sich derartige Laser sehr fein an die jeweilige Gehäusedicke und Ableiterstärke anpassen lassen, ist es dennoch möglich, dass in Einzelfällen die Intensität des Lasers zu stark gewählt wird und der Laser die Gehäusewand und den Ableiter durchschlägt. Aus diesem Grund erfolgt die Verschweißung der Ableiter mit dem Gehäuse besonders bevorzugt in dem Teilbereich des Boden- bzw. des Deckelbereichs, der den axialen Hohlraum im Zentrum des Wickels stirnseitig begrenzt. Durchschlägt ein Laserstrahl das Gehäuse in diesem Bereich, kann der Wickel nicht beschädigt werden, der Laserstrahl wird stattdessen von dem gegenüber liegenden Gehäusehalbteil absorbiert oder von einem gegebenenfalls innerhalb des Hohlraums angeordneten Wickelkern.

Wenn möglich sollten die zu verschweißenden Ableiter möglichst flach an der Innenseite des Gehäuses anliegen. Dies kann beispielsweise gewährleistet werden, indem die Ableiter über ein Klebeband flach auf bzw. an den Stirnseiten eines Elektrodenwickels fixiert werden, bevor dieser in das Gehäuse eingelegt wird.

Die genannten und weitere Vorteile der Erfindung ergeben sich insbesondere auch aus der nun folgenden Beschreibung der Zeichnungen in Verbindung mit den Unteransprüchen. Dabei können die einzelnen Merkmale der Erfindung für sich allein oder in Kombination miteinander verwirklicht sein. Die beschriebenen Ausführungsformen dienen lediglich zur Erläuterung und zum besseren Verständnis der Erfindung und sind in keiner Weise einschränkend zu verstehen.

### Figurenbeschreibung

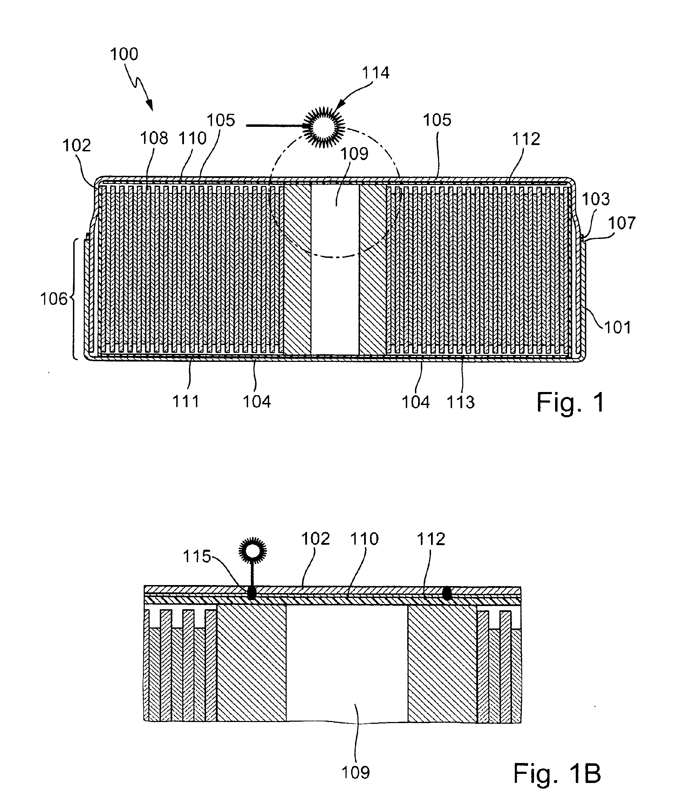

**Fig. 1** zeigt schematisch den Querschnitt einer bevorzugten Ausführungsform einer erfindungsgemäßen Knopfzelle **100.**

Diese weist zwei metallische Gehäusehalbteile, ein metallisches Becherteil **101** und ein metallisches Deckelteil **102,** auf. Über eine dazwischen liegende Dichtung **103** sind die beiden Teile dichtend miteinander verbunden. Zusammen bilden sie ein Gehäuse mit einem ebenen Bodenbereich **104** und einem dazu parallelen ebenen Deckelbereich **105** aus. Im Gebrauchszustand bilden diese beiden ebenen Bereiche **104** und **105** die Pole der Knopfzelle **100,** an denen eine Stromabnahme durch einen Verbraucher erfolgen kann. Der Zellendeckel **102** ist in den Zellenbecher **101** eingeschoben, so dass die Mantelbereiche des Zellendeckels und des Zellenbechers überlappen, wobei der Innenradius des Zellenbechers **101** im überlappenden Bereich **106** in Richtung der Schnittkante **107** im Wesentlichen konstant ist. Der Rand des Zellenbechers **101** ist also nicht umgebördelt, bei der dargestellten Ausführungsform einer erfindungsgemäßen Knopfzelle **100** handelt es sich also um eine bördelfreie Knopfzelle.

Im Inneren der Elektrode ist ein Verbund **108** aus streifenförmigen Elektroden und streifenförmigen Separatoren angeordnet. Der Verbund **108** liegt dabei in Form eines spiralförmigen Wickels vor, dessen Stirnseiten in Richtung des ebenen Bodenbereichs **104** und des dazu parallelen ebenen Deckelbereichs **105** weisen. Aufgewickelt ist der Verbund auf dem Wickelkern **109** im Zentrum der Knopfzelle **100.** Bei dem Wickelkern handelt es sich um einen Hohlzylinder aus Kunststoff, der einen axialen Hohlraum im Zentrum des Wickels teilweise ausfüllt. Der Hohlraum selbst wird seitlich begrenzt durch den Wickel und nach oben sowie nach unten durch entsprechende kreisförmige Abschnitte der ebenen Becher- und Deckelbereiche des Knopfzellengehäuses. An diesen liegen Metallfolien **110** und **111** flach an, die als Ableiter dienen und mit den Elektroden verbunden sind. Gegen die Stirnseiten des Wickels sind diese Ableiter durch die Isolierelemente **112** und **113** abgeschirmt. Bei diesen handelt es sich um dünne Kunststofffolien. Die Wandstärke des Gehäuses beträgt im Bereich des ebenen Boden- bzw. Deckelbereichs in der Regel zwischen 30 µm und 400 µm. Die Dicke der als Ableiter dienenden Metallfolien **110** und **111** liegt in der Regel zwischen 5 µm und 100 µm.

Eine Verschweißung der als Ableiter dienenden Metallfolien **110** und **111** mit dem jeweiligen Gehäusehalbteil, die mittels des schematisch dargestellten Lasers **114** vorgenommen wird, erfolgt gemäß der vorliegend beschriebenen Erfindung bevorzugt in dem Teilbereich des Bodenbereichs bzw. des Deckelbereichs des Knopfzellengehäuses, der den axialen Hohlraum im Zentrum des Wickels stirnseitig begrenzt. Es entsteht dabei eine Schweißnaht **115,** die das Gehäuse der Knopfzelle **100** von außen bis ins Innere vollständig durchdringt und über die die innenliegenden als Ableiter dienenden Metallfolien **110** und **111** fest mit der Innenseite des Gehäuses verbunden sind. Dies ist in der ausschnittweisen Vergrößerung (**Fig.1B**) gut zu erkennen.

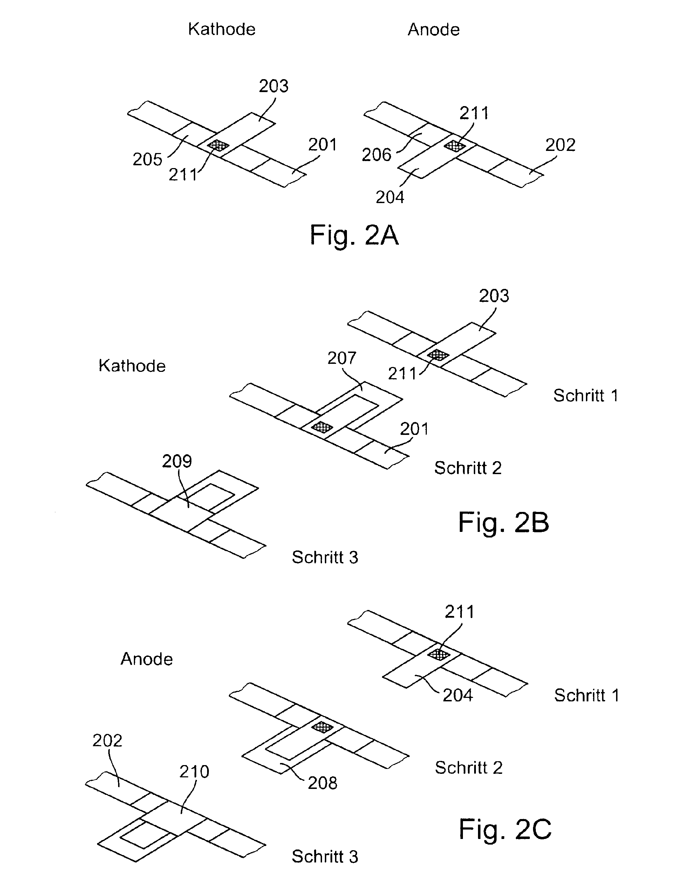

In **Fig. 2A** bis **Fig. 2C** sind einige wichtige Schritte bei der Herstellung eines Elektrodenwickels dargestellt, welcher sich insbesondere gut für erfindungsgemäße Knopfzellen (wie z.B. in Fig. 1 dargestellt) eignet. So sind in **Fig. 2A** unterbrochen mit Elektrodenaktivmaterial beschichtete Kollektorfolien **201** und **202** zu erkennen, an die in einem 90° Winkel separate Ableiterstreifen **203** und **204** durch Verschweißung angeformt werden. Der anodenseitige Ableiter **204** besteht aus Nickel oder Kupfer, der kathodenseitige Ableiter **203** aus Aluminium. Das Anbringen der Ableiter **203** und **204** erfolgt jeweils in einem massefreien Bereich (**205**, **206)** der Kollektorfolien **201** und **202.** Ansonsten sind diese beidseitig mit Aktivmaterial beschichtet. Die Verbindung zwischen den Kollektorfolien **201** und **202** und den Ableitern kann z.B. durch Verschweißung im Bereich **211** realisiert werden.

In **Fig. 2B** und **Fig. 2C** ist dargestellt, wie die Rückseiten der Ableiter **203** und **204** mit einem Isolationsband **207** und **208** (z.B. aus Kapton oder Polypropylen) abgeklebt werden (Schritt 2). Dieses Isolationsband soll später als Isolierelement fungieren, das einen unmittelbaren elektrischen Kontakt zwischen den Ableitern **203** und **204** und den Stirnseiten der herzustellenden Elektrodenwickel unterbinden soll. Mit weiteren Klebstreifen **209** und **210** werden die Ableiter **203** und **204** in einem weiteren Schritt (Schritt 3) von vorne fixiert. Der Bereich **211** wird dabei überklebt.

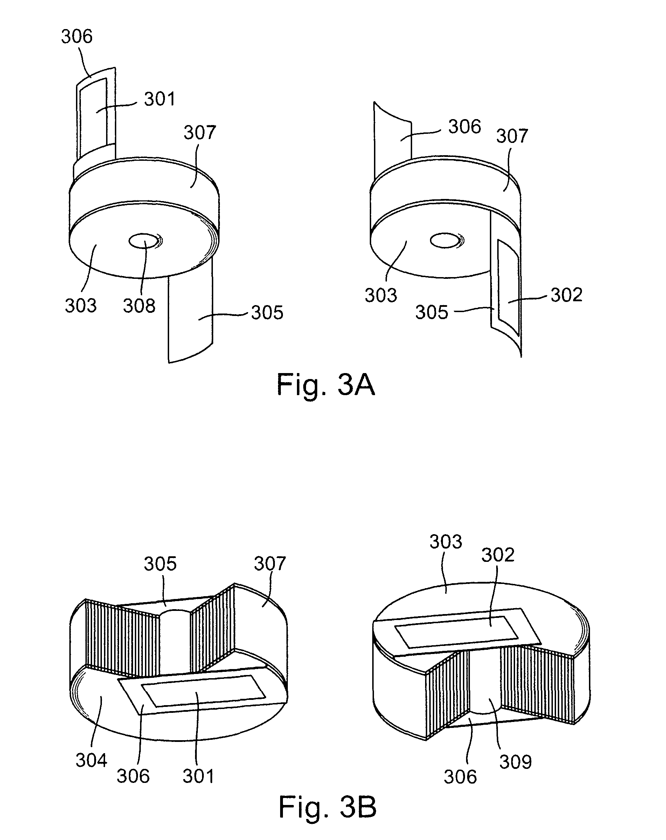

In **Fig. 3A** ist die Ableiterposition in einem Wickel aus gemäß Fig. 2A bis 2C erhaltenen Elektrodenfolien gut erkennbar. Dargestellt sind zwei unterschiedliche perspektivische Darstellungen ein und desselben Wickels (links und rechts). Die Ableiter **301** (entspricht dem Ableiter **204** in Fig. 2) und **302** (entspricht dem Ableiter **203** in Fig. 2) selbst sind axial in einem 90°-Winkel zur Wickelrichtung ausgerichtet und kommen durch Umklappen um 90° flach auf den Stirnseiten **303** und **304** der Elektrodenwickel zum Liegen. Die Isolierelemente **305** und **306** (entsprechen den Isolationsbändern **207** und **208** in Fig. 2) unterbinden einen unmittelbaren elektrischen Kontakt zwischen den Ableitern **301** und **302** und den Stirnseiten **303** und **304** der dargestellten Elektrodenwickel. Die Außenseite der Wickel ist durch die isolierende Folie **307** geschützt. Idealerweise überlappen die Ableiter **301** und **302** mit den stirnseitigen Öffnungen des axialen Hohlraums **308,** so dass in diesem Bereich eine Verschweißung mit dem Knopfzellengehäuse erfolgen kann. Dies ist gut in **Fig. 3B** zu erkennen, ebenso wie der Wickelkern **309,** der den axialen Hohlraum **308** ausfüllt.

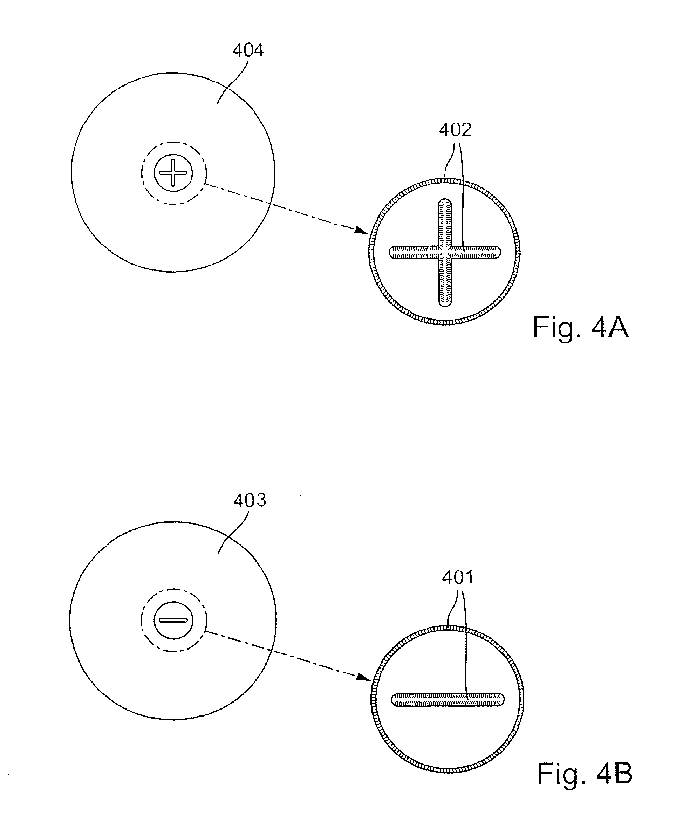

**Fig. 4A** und **4B** zeigen mögliche Verschweißungsvarianten. So ist es zum Beispiel möglich, die Schweißnaht als Minus-Symbol **401** oder Plus-Symbol **402** (siehe jeweils vergrößerte Darstellung rechts) auszugestalten und damit gleichzeitig die Polarität des jeweiligen Gehäusehalbteils zu kennzeichnen. Das Plus-Symbol **402** wird bevorzugt auf der Unterseite **404** einer erfindungsgemäßen Knopfzelle aufgebracht, das Minus-Symbol auf der Oberseite **403.**

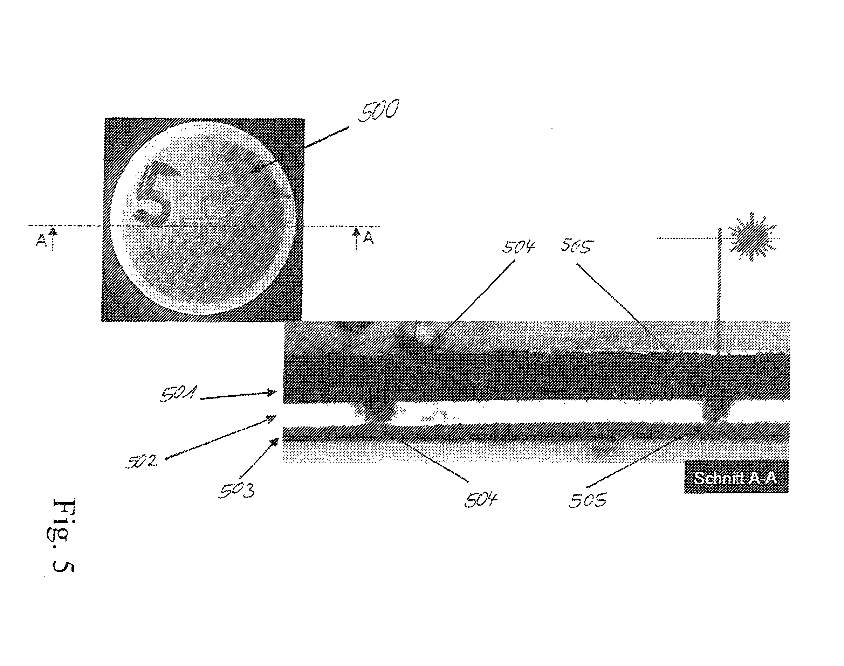

In **Fig. 5** ist eine vergrößerte Darstellung eines Querschnitts durch ein Gehäusehalbteil **500** einer erfindungsgemäßen Knopfzelle dargestellt. Zu erkennen ist die Becherwand **501** aus Edelstahl, der darunter flach anliegende Aluminiumableiter **502** und ein darunter angeordnetes Isolierband **503** aus Kaptonfolie. Gut zu erkennen sind die Schweißnähte **504** und **505,** die sich von der Gehäuseaußenseite nach innen bis hin zu dem Isolierband **503** aus Kaptonfolie erstrecken. Bei dem Bild links oben handelt es sich um eine Draufsicht auf den geschnittenen ebenen Bodenbereich des Gehäusehalbteils **500.** Verschweisst wurden das Gehäusehalbteil **500** und der Ableiter **502** mit einem Ytterbium-dotierten Faserlaser vom Typ YLR-400-AC (Herstellerfirma IPG Photonics Corporation, USA). Die Intensität des Lasers wurde dabei so eingestellt, dass das Isolierband **503** nicht durchschlagen wurde.

## Patentansprüche

1. Knopfzelle, umfassend
- zwei metallische Gehäusehalbteile, die durch eine elektrisch isolierende Dichtung voneinander getrennt sind und die ein Gehäuse mit einem ebenen Bodenbereich und einem dazu parallelen ebenen Deckelbereich ausbilden,
- einen Elektroden-Separator-Verbund mit mindestens einer positiven und mindestens einer negativen Elektrode innerhalb des Gehäuses, wobei der Verbund in Form eines vorzugsweise spiralförmigen Wickels vorliegt, dessen Stirnseiten in Richtung des ebenen Bodenbereichs und des ebenen Deckelbereichs weisen, und
- metallische Ableiter, die die mindestens eine positive und die mindestens eine negative Elektrode mit jeweils einem der Gehäusehalbteile elektrisch verbinden,
wobei zumindest einer der Ableiter durch Verschweißung mit dem jeweiligen Gehäusehalbteil verbunden ist und wobei die Knopfzelle Schweißnähte und/oder Schweißpunkte aufweist, die das Gehäuse ausgehend von seiner Außenseite durchdringen.

2. Knopfzelle nach Anspruch 1, **dadurch gekennzeichnet, dass** der oder die Ableiter in dem ebenen Boden- bzw. in dem ebenen Deckelbereich an die Innenseite des Gehäuses angeschweißt sind.

3. Knopfzelle nach Anspruch 1 oder Anspruch 2, **dadurch gekennzeichnet, dass** es sich bei den Ableitern um flächige Ableiter, vorzugsweise um Metallfolien, insbesondere um rechteck-, streifen- oder bandförmige Metallfolien, handelt.

4. Knopfzelle nach einem der vorhergehenden Ansprüche, **dadurch gekennzeichnet, dass** zumindest ein Teilabschnitt des oder der Ableiter, insbesondere des oder der flächigen Ableiter, im Boden- und/oder Deckelbereich des Gehäuses flach an der Innenseite der Gehäusehalbteile anliegt.

5. Knopfzelle nach einem der vorhergehenden Ansprüche, insbesondere nach Anspruch 4, **dadurch gekennzeichnet, dass** sie mindestens ein separates Isoliermittel umfasst, das einen direkten elektrischen Kontakt zwischen den Stirnseiten des Wickels und den Ableitern unterbindet.

6. Knopfzelle nach einem der vorhergehenden Ansprüche, **dadurch gekennzeichnet, dass** der oder die Ableiter und das Gehäuse über eine oder mehrere punkt- und/oder linienförmige Schweißverbindungen verbunden sind.

7. Knopfzelle nach einem der vorhergehenden Ansprüche, **dadurch gekennzeichnet, dass** der Wickel in seinem Zentrum einen axialen, mantelseitig durch den Wickel und stirnseitig durch einen Teilbereich des Böden- bzw. des Deckelbereichs begrenzten im Wesentlichen zylindrischen Hohlraum aufweist und dass zumindest einer der Ableiter in diesem Teilbereich mit dem entsprechenden Gehäusehalbteil verschweißt ist.

8. Verfahren zur Herstellung von Knopfzellen, insbesondere von Knopfzellen gemäß einem der vorhergehenden Ansprüche, umfassend die Schritte
(a) Bereitstellen eines ersten und eines zweiten metallischen Gehäusehalbteils,
(b) Einlegen eines Elektroden-Separator-Verbundes mit einer positiven und einer negativen Elektrode, wobei an mindestens eine der Elektroden ein metallischer Ableiter angebunden ist, in eines der Gehäusehalbteile,
(c) Zusammenfügen der beiden Gehäusehalbteile, gegebenenfalls unter Vornahme separater Schritte zur Abdichtung des Gehäuses und
(d) Anschweißen von mindestens einem der Ableiter an die Innenseite eines der metallischen Gehäusehalbteile,
wobei Schritt (d) nach Schritt (c) durchgeführt wird und wobei das Anschweißen mittels eines Lasers erfolgt.

## Claims

1. A button cell, comprising
- two metal housing halves, which are separated from one another by an electrically insulating seal and form a housing having a plane bottom region and a plane top region parallel thereto,
- an electrode separator assembly comprising at least one positive electrode and at least one negative electrode inside the housing, the assembly being provided in the form of a preferably spiral-shaped winding, the end sides of which face in the direction of the plane bottom region and the plane top region, and
- metal conductors, which electrically connect the at least one positive electrode and the at least one negative electrode respectively to one of the housing halves, wherein at least one of the conductors is connected to the respective housing half by welding, and wherein the button cell has weld beads and/or weld spots that pass through the housing starting from its outer side.

2. The button cell according to claim 1, **characterized in that** the conductor or conductors are welded onto the inner side of the housing in the plane bottom region and the plane top region, respectively.

3. The button cell according to claim 1 or to claim 2, **characterized in that** the conductors are flat conductors, preferably metal foils, in particular rectangular, strip- or band-shaped metal foils.

4. The button cell according to any one of the preceding claims, **characterized in that** at least one subsection of the conductor or conductors, in particular of the flat conductor or conductors, bears flat on the inner side of the housing halves in the bottom and/or top region of the housing.

5. The button cell according to any one of the preceding claims, in particular according to claim 4, **characterized in that** it comprises at least one separate insulating means which prevents direct electrical contact between the end sides of the winding and the conductors.

6. The button cell according to any one of the preceding claims, **characterized in that** the conductor or conductors and the housing are connected by means of one or more spot-like and/or linear welded connections.

7. The button cell according to any one of the preceding claims, **characterized in that** the winding comprises at its center an axial, essentially cylindrical cavity delimited laterally by the winding and on the end sides by a subregion of the bottom and top region, respectively, and **in that** at least one of the conductors is welded to the corresponding housing half in this subregion.

8. A method for producing button cells, in particular button cells according to any one of the preceding claims, comprising the steps:
(a) providing a first and a second metal housing half,
(b) placing an electrode separator assembly comprising a positive electrode and a negative electrode in one of the housing halves, a metal conductor being bonded to at least one of the electrodes,
(c) assembling the two housing halves, optionally with the provision of separate steps for sealing the housing, and
(d) welding at least one of the conductors to the inner side of one of the metal housing halves,
wherein step (d) is carried out after step (c), and wherein the welding is carried out by means of a laser.

## Revendications

1. Pile bouton, comprenant:
- deux demi-enveloppes métalliques, lesquelles sont séparées l'une de l'autre par un joint d'isolation électrique et lesquelles forment une enveloppe avec une zone du fond plane et une zone du couvercle plane en parallèle avec celle-ci,
- un ensemble électrodes/séparateur avec au moins une électrode positive et au moins une électrode négative à l'intérieur de l'enveloppe, l'ensemble se présentant sous la forme d'un enroulement de préférence en spirale dont les faces frontales sont orientées en direction de la zone du fond plane et de la zone du couvercle plane, et
- des conducteurs métalliques, lesquels relient électriquement cette au moins une électrode positive et cette au moins une électrode négative respectivement à l'une des demi-enveloppes,
au moins l'un des conducteurs étant relié par soudure à la demi-enveloppe respective et la pile bouton présentant des cordons de soudure et/ou des points de soudure qui traversent l'enveloppe en partant de son côté extérieur.

2. Pile bouton selon la revendication 1, **caractérisée en ce que** le ou les conducteurs sont soudés sur le côté interne de l'enveloppe dans la zone du fond plane ou la zone du couvercle plane.

3. Pile bouton selon la revendication 1 ou la revendication 2, **caractérisée en ce que** concernant les conducteurs, il s'agit de conducteurs plats, de préférence de films métalliques, en particulier de films métalliques rectangulaires, en forme de rayures ou de bandes.

4. Pile bouton selon l'une des revendications précédentes, **caractérisée en ce qu'**au moins une section partielle du ou des conducteur(s), en particulier du ou des conducteur (s) plat(s), repose à plat contre le côté interne des demi-enveloppes dans la zone du fond et/ou la zone du couvercle de l'enveloppe.

5. Pile bouton selon l'une des revendications précédentes, en particulier selon la revendication 4, **caractérisée en ce qu'**elle comprend au moins un moyen d'isolation distinct qui empêche un contact électrique direct entre les faces frontales de l'enroulement et les conducteurs.

6. Pile bouton selon l'une des revendications précédentes, **caractérisée en ce que** le ou les conducteur(s) et l'enveloppe sont reliés par l'intermédiaire d'une ou plusieurs liaisons soudées en forme de points et/ou de lignes.

7. Pile bouton selon l'une des revendications précédentes, **caractérisée en ce que** l'enroulement présente en son centre un espace creux axial, délimité côté enveloppe par l'enroulement et côté frontal par une zone partielle de la zone du fond ou de la zone du couvercle, sensiblement cylindrique, et **en ce qu'**au moins l'un des conducteurs est soudé dans cette zone partielle avec la demi-enveloppe correspondante.

8. Procédé pour la fabrication de piles bouton, en particulier de piles bouton selon l'une des revendications précédentes, comprenant les étapes suivantes :
(a) mise à disposition d'une première et d'une seconde demi-enveloppe métallique,
(b) mise en place d'un ensemble électrodes/séparateur avec une électrode positive et une électrode négative, un conducteur métallique étant fixé sur au moins l'une des électrodes, dans l'une des demi-enveloppes,
(c) jonction des deux demi-enveloppes en faisant appel le cas échéant à des étapes distinctes pour l'étanchéification de l'enveloppe, et
(d) soudage d'au moins l'un des conducteurs sur le côté interne de l'une des demi-enveloppes métalliques,
l'étape (d) étant réalisée après l'étape (c) et le soudage s'effectuant à l'aide d'un laser.
